# EUROPÄISCHE PATENTANMELDUNG

(11) **EP 3 739 407 A1**
(43) Veröffentlichungstag der Anmeldung: **18.11.2020**
(21) Anmeldenummer: 19174172.7
(22) Anmeldetag: 13.05.2019
(51) Int. Cl.: G05B 19/418, H04L 29/08

(54) **VERFAHREN ZUR ANPASSUNG EINER KOMMUNIKATIONSTOPOLOGIE IN EINEM CYBER-PHYSISCHEN SYSTEM**

(71) Anmelder: Siemens Aktiengesellschaft, 80333 München (DE)
(72) Erfinder: Gawron-Deutsch, Tobias, 1040 Wien (AT); Kintzler, Florian, 1140 Wien (AT); Frank, Reinhard, 81369 München (DE)
(74) Vertreter: Maier, Daniel Oliver

(57) **Zusammenfassung**

Die Erfindung betrifft ein Verfahren zur Anpassung einer Kommunikationstopologie in einem so genannten cyber-physischen System (CPS), welches zumindest ein physisches System (PS) und ein Kommunikationsnetz (KN) umfasst. Dabei ist die Kommunikationstopologie des Kommunikationsnetzes (KN) unabhängig von einer Topologie des physischen Systems (PS). Den Komponenten des physischem Systems (PS) sind Feldeinheiten (FD1, FD2, FD3, FD4) zugeordnet, auf welchen Anwendungen ablaufen, von welchen die Funktionalität der jeweiligen Feldeinheit (FD1, FD2, FD3, FD4) festgelegt wird. Von den Feldeinheiten (FD1, FD2, FD3, FD4) bzw. den darauf laufenden Anwendungen werden über die Kommunikationstopologie des Kommunikationsnetzes (KN) unter Verwendung von Vermittlereinheiten (B1, B2) Daten ausgetauscht. Wird während einer laufenden Überwachung des physischen Systems (PS) eine Änderung der Topologie des physischen Systems festgestellt und auf Basis der festgestellten, geänderten Topologie des physischen Systems (PS) Komponenten im physischen System (PS) als benachbart erkannt werden (1), so werden die zu den als benachbart erkannten Komponenten zugehörigen Feldeinheiten (FD1, FD2, FD3, FD4) zu Kommunikations-Subnetzen zusammengefasst werden (3, 4). Je Kommunikations-Subnetz wird eine Vermittlereinheit (B1, B2) zur Verfügung gestellt und aktiviert (2, 5) und auf Basis der festgestellten, geänderten Topologie des physischen Systems (PS) die Kommunikationstopologie des Kommunikationsnetzes (KN) derart rekonfiguriert (6), dass von den jeweiligen Feldeinheiten (FD1, FD2, FD3, FD4) des jeweiligen Kommunikations-Subnetzes über die im jeweiligen Kommunikations-Subnetz zur Verfügung gestellte Vermittlereinheit (B1, B2) Daten ausgetauscht werden.

## Beschreibung

### Technisches Gebiet

Die vorliegende Erfindung betrifft ein Verfahren zur Anpassung einer Kommunikationstopologie in einem so genannten cyber-physischen System, welches zumindest ein physisches System und ein Kommunikationsnetz umfasst. Dabei ist die Kommunikationstopologie des Kommunikationsnetzes zumeist unabhängig von einer Topologie des physischen Systems. Den Komponenten des physischem Systems sind Feldeinheiten zugeordnet, auf welchen Anwendungen ablaufen, von welchen die Funktionalität der jeweiligen Feldeinheit festgelegt wird. Von den Feldeinheiten bzw. den darauf laufenden Anwendungen werden über die Kommunikationstopologie des Kommunikationsnetzes unter Verwendung von Vermittlereinheiten Daten ausgetauscht.

### Stand der Technik

Heutzutage werden in vielen Bereichen wie z.B. im Energiebereich, in der Wasserversorgung, in der Gebäudetechnik, im Fertigungs- und Automatisierungsbereich, insbesondere bei modernen Produktionsanlagen der so genannten Industrie 4.0, etc. so genannte cyber-physische Systeme bzw. cyber-physical Systems (CPS) eingesetzt. Cyber-physische Systeme bezeichnen dabei üblicherweise eine Kopplung von Komponenten eines physischen Systems wie z.B. eines Energieversorgungsnetzes, einer Wasserversorgungssystems, eines Gebäudes oder Gebäudekomplexes, einer Fertigungs- oder Produktionsanlage, etc. mit einer Datenverarbeitungsinfrastruktur bzw. einem Kommunikationsnetz (z.B. Access Points, Router, Switches, drahtgebundene und/oder drahtlose Kommunikationsverbindungen), über welches das physische System überwacht, geregelt und gesteuert wird. Das Funktionsprinzip des cyber-physischen Systems basiert darauf, dass das physische System bzw. seine Komponenten (z.B. Stromleitungen, Transformatorstationen, Umspannwerke, Schaltereinheiten, Wasserleitungen, Raumeinheiten, Heizungs- und/oder Kühleinheiten, Schienen, Förderbänder, etc.) über zugeordnete Feldeinheiten bzw. Feldgeräte - meist Sensor- bzw. Messeinheiten und Steuer- und/oder Regeleinheiten sowie Aktoren - mit dem Kommunikationsnetz verbunden sind. Dabei werden von Feldeinheiten (wie z.B. Sensor- und/oder Messeinheiten) Messdaten aus der physischen Welt geliefert und über das Kommunikationsnetz z.B. für eine Verarbeitung weitergeleitet. Nach der Verarbeitung der Messdaten können daraus z.B. Steuer- und/oder Regeldaten abgeleitet werden, welche über das Kommunikationsnetz an Feldeinheiten (z.B. Steuereinheiten, Regeleinheiten oder Aktoren) weitergegeben werden, von welchen das physische System bzw. seine jeweiligen Komponenten beeinflusst werden.

Damit in einem derartigen cyber-physikalischen System benachbarte Komponenten und/oder die zugehörigen Feldgeräte wie z.B. Steuergeräte in einer Transformatorstation, Regeleinheiten in einer Wasserversorgung, etc. miteinander interagieren können, müssen sie Daten (z.B. Messdaten, Steuer- und/oder Regeldaten) miteinander austauschen können. Benachbarte Komponenten sind dabei beispielsweise Komponenten des physischen Systems, welche miteinander in Verbindung stehen - z.B. Komponenten eines Stromnetzes, welche miteinander verschaltet sind und z.B. von einem gemeinsamen Strom durchflossen werden; Komponenten einer Wasserversorgung, welche zusammenhängen und von einem gemeinsamen Wasserfluss durchflossen werden oder Komponenten einer Produktionsanlage (z.B. Produktionsstationen, Förderbänder, etc.), welche vom selben Produktstrom genutzt werden. Dabei können sich Nachbarschaften von Komponenten im operativen Betrieb des jeweiligen Systems verändern, indem beispielsweise in einem Stromnetz ein Schalter umgelegt oder in einem Wasserversorgungssystem ein Ventil geöffnet oder geschlossen wird und sich dadurch der Strom- bzw. der Wasserfluss im System ändert.

Ein Austausch von Daten zwischen informationsverarbeitenden Komponenten wird in einem Kommunikationsnetz eines solchen cyber-physischen Systems sehr häufig mit Hilfe eines so genannten Publish-Subscribe-Mechanismus realisiert. Ein Publish-Subscribe-Mechanismus ist ein Nachrichten- bzw. Datenübermittlungskonzept, bei welchem von Sendereinheiten bzw. Datenquellen Daten und/oder Nachrichten nicht direkt an Empfängereinheiten bzw. Datensenken übertragen werden, sondern die Datenquellen stellen ihre Dateninhalte auf einer zentralen Vermittlereinheit - einem so genannten Broker - zur Verfügung. Die Dateninhalte werden dann von der Vermittlereinheit z.B. in unterschiedliche Klassen unterteilt. Empfängereinheiten bzw. Datensenken können sich bei der Vermittlereinheit bzw. dem Broker registrieren, um Dateninhalte einer oder mehrerer entsprechender Klassen zu erhalten. Damit allerdings nur die gewünschten bzw. relevanten Dateninhalte bei den jeweiligen Datensenken ankommen bzw. von diesen verarbeitet werden, ist üblicherweise eine manuelle Konfiguration und/oder eine entsprechende Implementation auf einer Anwendungsebene - d.h. in auf z.B. den Feldeinheiten ablaufenden Anwendungen bzw. Applikationen - vorzunehmen. Dadurch ergibt sich ein in den Anwendungen bzw. Applikationen implementiertes und verwaltetes Abbild des physischen Systems.

Bei vielen cyber-physischen Systemen kann sich allerdings eine Topologie (d.h. ein Aufbau bzw. eine Struktur) des physischen Systems- z.B. durch Umschalten von elektrischen Leitungen in einem Stromnetz, durch Sperren eines Ventils in einer Wasserversorgungseinrichtung oder durch Umrüstung einer oder mehrerer Stationen in einer Produktionsanlage, etc. - dynamisch verändern. Ein derartiges System ist beispielsweise ein Energieversorgungsnetz, bei welchem beispielsweise von einem Umspannwerk in einem zugehörigen Versorgungsgebiet für Einhaltung eines vorgegebenen Spannungsbandes gesorgt wird. Mit Hilfe eines Stufentransformators kann z.B. die Spannung im zugehörigen Versorgungsgebiet angehoben oder gesenkt werden, wobei der Stufentransformator von einer Anwendung oder Applikation gesteuert werden, welche z.B. auf einer Feldeinheit wie z.B. einem zum Stufentransformator zugeordneten Steuergerät abläuft. Für die Steuerung erhält die Anwendung über das Kommunikationsnetz Spannungsmesswerte (als Daten) von den Komponenten des physischen Systems bzw. zugehörigen Feldeinheiten, welche z.B. in dem Umspannwerk zugeordneten Ortsnetzstationen physisch verortet sind und damit als Datenquellen fungieren. Wird nun z.B. aufgrund einer Umschaltung im Energieversorgungsnetz ein Teil des ursprünglichen Versorgungsgebiets des Umspannwerks von einem anderen Umspannwerk versorgt, dann müssen die Spannungsmesswerte bzw. Daten aus dem entsprechenden Teil des Energieversorgungsnetzes von einer Anwendung bzw. der entsprechenden Feldeinheit im neu zuständigen Umspannwerk berücksichtigt werden. Das führt dazu, dass in den Anwendungen und in den Konfigurationen der beiden Umspannwerke die jeweiligen Topologie-Varianten des Energieversorgungsnetzes bzw. des physischen Systems berücksichtigt werden müssen, damit die Dateninhalten für die Verarbeitung in den jeweiligen Feldeinheiten zur Verfügung stehen. Auch andere Versorgungssystem (z.B. Wasserversorgung, etc.) oder Fertigungs- und/oder Produktionsanlagen können beispielsweise physische System mit sich dynamisch ändernder Topologie darstellen.

Wird nun im Kommunikationsnetz des cyber-physischen Systems mit sich dynamisch ändernder Topologie des physischen Systems ein so genannter Publish-Subscribe-Mechanismus für den Datenaustausch zwischen benachbarten Komponenten eingesetzt, so müssen ebenfalls alle relevanten Topologie des physischen Systems und die jeweiligen lokalen Auswirkungen in den Anwendungen hinterlegt sein. Weiterhin ist es notwendig, dass die relevanten Topologien auch vom Publish-Subscribe-Mechanismus berücksichtigt werden. D.h. die als Datenquellen fungierenden Komponenten bzw. die zugehörigen Feldeinheiten und Anwendungen müssen anhand der jeweils aktuellen Topologie entscheiden können, wo sie ihre Daten zur Verfügung stellen (publishen) müssen, und die als Datensenken fungierenden Komponenten bzw. die zugehörigen Feldeinheiten und Anwendungen müssen anhand der jeweils aktuellen Topologie erkennen können, woher sie die benötigten Daten beziehen (subskribieren) können.

Die Berücksichtigung der relevanten Topologien des physischen Systems des cyber-physischen Systems in den Anwendungen und durch den im Kommunikationsnetz des cyber-physischen Systems angewendeten Publish-Subscribe-Mechanismus führt zu einer erhöhten Komplexität insbesondere der Datenquellen und der zugehörigen Anwendungen, welche z.B. für jede relevante Topologie die entsprechenden benachbarten - d.h. aktuell mit ihnen verbundenen - Komponenten bzw. zugehörigen Feldeinheiten erkennen und das Publish-Subscribe-Verhalten lokal an die jeweils aktuelle Topologie des physischen Systems anpassen können. Dies kann beispielsweise zu einem erhöhten Ressourcenverbrauch durch die Anwendungen, zu einer komplizierteren Wartbarkeit des Gesamtsystems, zu einer Steigerung des Aufwands bei der Entwicklung der jeweiligen Anwendungen sowie des Gesamtsystems und zu einer durch die erhöhte Komplexität bedingten höheren Fehleranfälligkeit führen.

Daher kann es bei cyber-physischen Systemen mit sich ändernder Topologie des zugehörigen physischen Systems von Vorteil sein, wenn die Verarbeitung von Daten bzw. Dateninhalten in den Anwendungen bzw. Applikationen (z.B. zur Überwachung, Steuerung und/oder Regelung) und eine durch die Topologie bedingte Datenauswahl - d.h. welche Komponenten als Datensenke von welchen Komponenten als Datenquelle Daten bzw. Dateninhalte erhalten muss bzw. welche Komponenten miteinander Daten und/oder Nachrichten über das Kommunikationsnetz austauschen müssen/sollen - voneinander getrennt ist. Damit kann von der jeweiligen Anwendung die jeweilige Kern-Aufgabe (z.B. Steuern und/oder Regeln einer Komponente des physischen Systems) konzentriert wahrgenommen werden.

Als ein Ansatz, von welchem einen Trennung eines Datenroutings von einer Anwendungslogik ermöglicht wird, kann z.B dass so genannten Software Defined Network (SDN) herangezogen werden, welches z.B. aus der Schrift "Halaplidis, E. et al.: "Software-Defined Networking (SDN): Layers and Architecture Terminology" RFC 7426; Internet Research Task Force (IRTF); January 2015." dar. Durch SDN kann in einer oder mehreren Kommunikationsebenen eine virtuelle Netzwerktopologie für das Kommunikationsnetz aufgebaut werden, welche der jeweiligen Topologie des physischen Systems entspricht, und die Kommunikationstopologie des Kommunikationsnetzes einfach und dynamisch im Betrieb an neue Gegebenheiten angepasst werden. Dadurch können die jeweils zusammengehörigen (z.B. benachbarten) Komponenten des physischen Systems bzw. die zugehörigen Feldeinheiten in einem eigenen Subnetz zusammengefasst werden, wodurch eine Kommunikation nur unter den Komponenten des jeweiligen Subnetzes ermöglicht wird. Unter Zuhilfenahme sogenannter Service-Discovery-Mechanismen können sich die zusammengehörenden Komponenten in diesem Subnetz dann erkennen. Beim Einsatz von SDN sind für eine sinnvolle und für die jeweilige Anwendung notwendige Interaktion der einzelnen Feldeinheiten neben einem zentralen SDN-Controller keine weiteren zentralen Instanzen notwendig, wobei der zentrale SDN-Controller insbesondere eine Steuerlogik kontrolliert und verwaltet. Dadurch ist es möglich, im Kommunikationsnetz einzelne Datenflüsse zu erkennen, zu modifizieren und gegebenenfalls an eine andere Stelle zu lenken.

Bei einer auf Vermittlereinheiten bzw. einem Broker basierten Kommunikation weist allerdings die alleinige Verwendung von Ansätzen für das logische Daten-Routing wie z.B. SDN den Nachteil auf, dass weiterhin alle relevanten Topologien des physischen Systems und ihre entsprechenden Auswirkungen in den jeweiligen Funktionseinheiten bekannt und hinterlegt sein müssen, damit ein der Vermittler- bzw. Broker-Mechanismus für jede relevante Topologie des physischen Systems und der jeweils zugehörigen virtuelle Netzwerktopologie für das Kommunikationsnetz von den Funktionseinheiten korrekt genutzt werden kann.

### Darstellung der Erfindung

Der Erfindung liegt daher die Aufgabe zugrunde, ein Verfahren zur Anpassung einer Kommunikationstopologie in einem cyber-physischen System anzugeben, durch welches auf einfache und automatische Weise eine Kommunikation von Feldeinheiten bzw. der zugehörigen Anwendungen unter Verwendung von Vermittlereinheiten in einem Kommunikationsnetz des cyber-physischen Systems an dynamische Änderungen einer Topologie eines physischen Systems des cyber-physischen Systems angepasst werden kann, ohne dass die Feldeinheiten bzw. darauf laufenden Anwendungen und/oder deren Konfiguration verändert werden muss bzw. diese Änderungen explizit unterstützen oder umsetzen muss.

Diese Aufgabe wird durch Verfahren zur Anpassung einer Kommunikationstopologie in einem cyber-physischen System der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zur Anpassung einer Kommunikationstopologie in einem so genannten cyber-physischen System der eingangs erwähnten Art, welches zumindest ein physisches System und ein Kommunikationsnetz umfasst, wobei das Kommunikationsnetz zumeist eine von einer Topologie des physischen Systems unabhängige Kommunikationstopologie aufweist. Dabei sind den Komponenten des physischen Systems Feldeinheiten zugeordnet, auf welchen entsprechend der jeweiligen Funktionalität einer jeweiligen Feldeinheit Anwendungen ablaufen. Weiterhin wird von den Feldeinheiten - entsprechend der jeweiligen Funktionalität - die Kommunikationstopologie des Kommunikationsnetzes für einen Datenaustausch genutzt, wobei für den Datenaustausch zumindest eine Vermittlereinheit verwendet wird. Im Betrieb wird das physische System laufend auf Änderungen seiner Topologie überwacht. Auf Basis der festgestellten, geänderten Topologie des physischen Systems werden dann Komponenten im physischen System als benachbart - d.h. als physikalisch miteinander in Verbindung stehend bzw. verschaltet - erkannt und die zu den als benachbart erkannten Komponenten zugehörigen Feldeinheiten zu jeweiligen Kommunikations-Subnetzen zusammengefasst. Das bedeutet, dass Feldeinheiten, welche Komponenten zugeordnet sind, wobei diese Komponenten aufgrund der Topologie des physischen Systems z.B. vom selben elektrischen Strom, einem selben Wasserdurchfluss, vom selben Produktstrom durchflossen werden und damit interagieren sollten, im Kommunikationsnetz des cyber-physischen System in einem Kommunikations-Subnetz zusammengefasst werden. Für jedes der gebildeten Kommunikations-Subnetze wird dann eine Vermittlereinheit zur Verfügung gestellt und aktiviert. Auf Basis der festgestellten, geänderten Topologie des physischen Systems wird dann die Kommunikationstopologie des Kommunikationsnetzes derart rekonfiguriert, dass von den jeweiligen Feldeinheiten des jeweiligen Kommunikations-Subnetzes über die im jeweiligen Kommunikations-Subnetz zur Verfügung gestellte Vermittlereinheit Daten ausgetauscht werden. Über diese Vermittlereinheit werden also nur von solche Feldeinheiten Informationen ausgetauscht, welche in der aktuellen Topologie des cyber-physischen Systems benachbarten Komponenten zugeordnet sind.

Der Hauptaspekt der erfindungsgemäß vorgeschlagenen Lösung besteht darin, dass auf einfache Weise die Kommunikationstopologie des Kommunikationsnetzes, welche Vermittler-basiert ausgestaltet ist, in einem cyber-physischen System automatisch - d.h. ohne manuelle Eingriffe - an eine jeweils aktuelle Topologie des physischen Systems angepasst wird. Die jeweils möglichen Topologie des physischen Systems müssen nicht auf den Feldeinheiten bzw. in darauf ablaufenden Anwendungen hinterlegt werden. Weder die Anwendungen noch deren Konfiguration müssen bei einer Topologieänderung des physischen Systems geändert werden. Durch die Rekonfiguration der Kommunikationstopologie des Kommunikationsnetzes wird von den jeweiligen Feldeinheiten und zugehörigen Anwendungen automatisch mit der entsprechenden Vermittlereinheit kommuniziert, wobei weder die Feldeinheiten noch die Anwendungen detaillierte Kenntnis über die jeweils aktuelle Topologie des physischen Systems benötigen.

Da durch das Verfahren zur Anpassung einer Kommunikationstopologie ein Nachführen der Kommunikationswege bei einer Topologieänderung des physischen Systems ausgelagert wird, können in den Anwendungen und auf den Feldeinheiten Ressourcen wie z.B. Speichereinheiten, Prozessoreinheiten, etc. gespart bzw. effizienter genutzt werden. Weiterhin können Kommunikationskosten reduziert und die Kommunikationseffizienz gesteigert werden. Es werden auch ein Entwicklungsaufwand für Anwendungen und ein Wartungsaufwand für das gesamte cyber-physische System reduziert. Weiterhin besteht die Möglichkeit, z.B. auf Daten-Netzwerkebene dynamisch und gegebenenfalls bedarfsorientiert Kommunikationsgruppen von Feldeinheiten zu formen und/oder aufzubrechen, ohne dass die physische Kommunikationsinfrastruktur umkonfiguriert werden muss. Diese Vorteile werden insbesondere dadurch erreicht, dass beim erfindungsgemäßen Verfahren dezentral vorgesehene Vermittlereinheiten zentral verwaltet werden und ein Management der Kommunikationstopologie des Kommunikationsnetzes durch Informationen über die Topologie des physischen Systems miteinander verknüpft werden.

Bei einer bevorzugten Ausführung des erfindungsgemäßen Verfahrens wird eine zentrale Topologie-Detektionseinheit vorgesehen, von welcher das physische System laufend auf Änderungen der Topologie überwacht wird und von welcher Änderungen der Topologie des physischen Systems festgestellt und weitergeleitet werden. Die zentrale Topologie-Detektionseinheit kann z.B. als domänenspezifische Komponente ausgestaltet sein und rasch und automatisch eine Topologieänderung im physischen System erkennen.

Weiterhin ist es von Vorteil, wenn die festgestellte Änderung der Topologie des physischen Systems an eine Managementeinheit und an eine zentrale Kontrolleinheit des Kommunikationsnetzes weitergeleitet wird. Von der Managementeinheit können dann auf einfache Weise den jeweiligen Kommunikations-Subnetzen die jeweiligen Vermittlereinheiten zur Verfügung gestellt werden. Mittels der Managementeinheit können die Vermittlereinheiten in den Kommunikations-Subnetzen dann gestartet bzw. aktiviert und/oder installiert werden. D.h. die Managementeinheit erkennt aufgrund von Informationen über die Topologie des physischen Systems und einer zentral abgelegten Konfiguration des cyber-physischen Systems, welche Komponenten bzw. den Komponenten zugeordneten Feldeinheiten Datenquellen bzw. Datensenken im Kommunikationsnetz darstellen und miteinander kommunizieren müssen. Pro Kommunikations-Subnetz wird dann von der Managementeinheit eine Vermittlereinheit bereitgestellt bzw. installiert und aktiviert bzw. gestartet.

Eine bevorzugte Ausführungsform der Erfindung sieht vor, dass der zentralen Kontrolleinheit des Kommunikationsnetzes eine Topologie-Mapping-Einheit zugeordnet ist. Von der Topologie-Mapping-Einheit kann auf Basis der geänderten Topologie des physischen Systems eine logische Kommunikationstopologie dynamisch abgeleitet werden, wobei die Information über die geänderte Topologie des physischen Systems von der zentralen Topologie-Detektionseinheit stammt. Bei der Planung der logischen Kommunikationstopologie werden von der Topologie-Mapping-Einheit die zu den als benachbart erkannten Komponenten gehörenden Feldeinheiten erkannt und zu Kommunikations-Subnetzen zusammengefasst. D.h. die von der Topologie-Mapping-Einheit abgeleitete, logische Kommunikationstopologie für das Kommunikationsnetz berücksichtigt, dass alle Feldeinheiten bzw. darauf ablaufende Anwendungen, welche einer physisch-topologischen Nachbarschaft zugeordnet sind, derart einem Kommunikations-Subnetz zugeordnet sind, dass sie mittels der Vermittlereinheit miteinander kommunizieren können, dass aber die Kommunikation zwischen den Kommunikations-Subnetzen abgeschirmt ist.

Durch die Weiterleitung der jeweils festgestellten Topologieänderung des physischen Systems an die zentrale Kontrolleinheit des Kommunikationsnetzes bzw. auf Basis der abgeleiteten Kommunikationstopologie kann von der zentralen Kontrolleinheit automatisch und auf einfache Weise eine Rekonfiguration des Kommunikationsnetzes auf Basis der geänderten Topologie des physischen Systems durchgeführt werden. Es werden beispielsweise unter anderem die Routeneinstellungen bzw. Datenwege in den Einheiten des Kommunikationsnetzes derart angepasst, dass die aus den Informationen über die geänderte Topologie des physischen Systems abgeleitet Kommunikationstopologie aufgebaut wird, und alle einem Kommunikations-Subnetz zugeordneten Feldeinheiten bzw. die zugehörigen Anwendungen mit der jeweiligen Vermittlereinheit des jeweiligen Kommunikations-Subnetzes kommunizieren können. Damit können als Datenquellen spezifizierte Feldeinheiten bzw. Anwendungen mit den ihnen aktuell logisch zugeordneten, als Datensenken spezifizierten Feldeinheiten bzw. Anwendungen innerhalb des jeweiligen Kommunikations-Subnetzes kommunizieren. Von den Feldeinheiten bzw. von den darauf ablaufenden Anwendungen wird dabei idealerweise kein Wissen über die jeweils aktuelle Topologie des physischen Systems benötigt.

Es ist weiterhin günstig, wenn die für das jeweilige Kommunikations-Subnetz zur Verfügung gestellte Vermittlereinheit auf einer vorgegebenen Feldeinheit das jeweiligen Kommunikations-Subnetzes bereitgestellt und aktiviert wird. Dadurch können beispielsweise nach einer Änderung der Kommunikationstopologie bereits auf Feldeinheiten in Kommunikations-Subnetzen verfügbare Vermittlereinheiten unverändert oder leicht modifiziert behalten werden. Dadurch kann z.B. der Aufwand für die Rekonfiguration der Kommunikationstopologie gering gehalten werden.

Idealerweise können die Vermittlereinheiten, welche für die jeweiligen Kommunikations-Subnetze zur Verfügung gestellt werden, auf so genannten Edge-Computing-Feldeinheiten bereitgestellt und aktiviert werden. Edge-Computing bezeichnet eine dezentrale Datenverwaltung z.B. am Rand eines Kommunikationsnetzes - dem so genannten Edge. Beim so genannten Edge-Computing werden z.B. Anwendungen, Daten und Dienste von zentralen Knoten bzw. Komponenten des Kommunikationsnetzes (z.B. Rechenzentren, etc.) weg zu den äußeren Rändern des Kommunikationsnetzes - z.B. zu im Netz angeordneten Feldeinheiten - verlagert. Diese Art von Feldeinheiten sind dann beispielsweise in der Lage zusätzliche Anwendungen zu starten und zu stoppen bzw. zu installieren und zu deinstallieren.

Zweckmäßiger Weise können nach der Anpassung der Kommunikationstopologie an die festgestellte, aktuelle Topologie des physischen Systems nicht mehr benötigte Vermittlereinheiten gestoppt und/oder deinstalliert werden. Durch die Veränderung der Topologie des physischen Systems kann sich beispielsweise die Anzahl der Kommunikations-Subnetze, welche auf Basis von festgestellten Nachbarschaften von Komponenten gebildet werden, reduzieren. Die Vermittlereinheiten von wegfallenden Kommunikations-Subnetzen können z.B. von der Managementkomponenten gestoppt bzw. gegebenenfalls deinstalliert werden. Weiterhin kann es durch die Veränderung der Topologie des physischen Systems auch möglich sein, dass eine in einem Kommunikations-Subnetz bereits vorhandene Vermittlereinheit nicht mehr verwendet werden kann bzw. eine neue Vermittlereinheit bereitgestellt wird. Die nicht mehr verwendbare Vermittlereinheit kann dann ebenfalls gestoppt und gegebenenfalls deinstalliert werden.

Es ist vorteilhaft, wenn im Kommunikationsnetz des cyber-physischen Systems für eine Datenvermittlung ein so genannter Publish-Subscribe-Mechanismus eingesetzt wird. Bei Verwendung eines so genannten Publish-Subscribe-Mechanismus werden z.B. Daten und/oder Nachrichten von einer Publish- oder SenderKomponente über einen so genannten Broker zu einer Subscribe- oder Empfänger-Komponente verteilt. Dabei kann die Empfänger-Komponente beispielsweise ein Interesse beim Broker registrieren, um Daten und/oder Nachrichten von einer SenderKomponente in Bezug auf einen bestimmten Nachrichteninhalt zu erhalten. Durch den Broker werden normalerweise Integrität der Senderkomponente sichergestellt und die Verteilung der Daten bzw. Nachrichten verwaltet. Bei der gegenständlichen Erfindung werden bei einer Verwendung des Publish-Subscribe-Mechanismus die Vermittlereinheiten in den jeweiligen Kommunikations-Subnetzen durch Kommunikations-Subnetz-spezifische Broker realisiert.

Es ist außerdem vorteilhaft, wenn eine Kommunikationsnetztopologie des Kommunikationsnetzes, welche eine Basis für die Kommunikationstopologie des Kommunikationsnetzes (KN) bildet, mittels eines so genannten Software-Defined-Networks oder SDN festgelegt wird. Bei der Verwendung von SDN können sehr einfach virtuelle Netzwerktopologien für das Kommunikationsnetz des cyber-physischen Systems aufgebaut und adaptiert werden. Die zu benachbarten physischen Komponenten zugehörigen Feldeinheiten können auf einfache Weise über das Kommunikationsnetz die Kommunikations-Subnetz-spezifische Vermittlereinheit erkennen und somit zum Austausch von Daten entsprechend der jeweiligen Anwendungen bzw. Funktionalitäten (z.B. Sensor-, Mess-, Datenverarbeitungs-, Steuer- oder Regeleinheit, Aktor) mit anderen im selben Kommunikations-Subnetz befindlichen Feldeinheiten nutzen. Die logische Kommunikationstopologie des Kommunikationsnetzes ist durch die Kombination der Kommunikationsnetztopologie des Kommunikationsnetzes des cyber-physischen Systems und den jeweils Kommunikations-Subnetzspezifischen Vermittlereinheiten realisiert.

### Kurzbeschreibung der Zeichnung

Die Erfindung wird nachfolgend in beispielhafter Weise anhand der beigefügten Figuren erläutert. Es zeigen:
Figur 1 einen beispielhaften Ablauf des erfindungsgemäßen Verfahrens zur Konfigurationsänderung in einem cyber-physischen System;
Figuren 2a, 2b und 2c eine beispielhafte Anwendung des erfindungsgemäßen Verfahrens in einem beispielhaften cyber-physischen System, bei welchem eine Kommunikationstopologie des Kommunikationssystems dynamisch auf Basis einer Topologie des physischen Systems angepasst wird;

### Ausführung der Erfindung

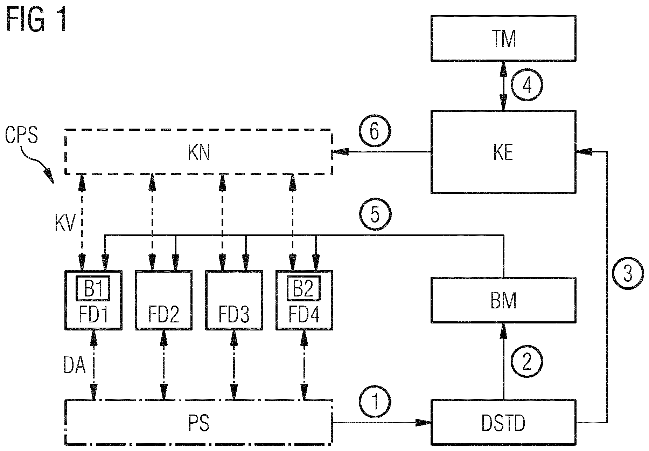

Figur 1 zeigt beispielhaft und schematisch ein cyberphysisches System CPS. Dieses System CPS verknüpft zumindest ein physisches System PS wie z.B. ein Energieversorgungsnetz, ein Wasserversorgungssystem, ein Gebäude oder einen Gebäudekomplex, eine Fertigungs- oder Produktionsanlage, etc. und eine Datenverarbeitungsinfrastruktur bzw. ein Kommunikationsnetz KN, mit dessen Hilfe das physische System PS überwacht, geregelt und gesteuert wird.

Dazu werden Daten DA des physischen Systems PS bzw. seiner Komponenten (z.B. Stromleitungen, Transformatorstationen, Umspannwerke, Wasserleitungen, Raumeinheiten, Heizungs- und/oder Kühleinheiten, Schienen, Förderbänder, etc.) mit Hilfe von zugeordneten Feldeinheiten FD1, FD2, FD3, FD4 wie z.B. Sensor- und/oder Messeinheiten gesammelt und beispielsweise für eine Weiterleitung entsprechend bearbeitet. Von den Feldeinheiten FD1, FD2, FD3, FD4 werden dann auf Basis der entsprechend bearbeiteten Daten DA Informationen und/oder Nachrichten KV über das Kommunikationsnetz KN mittels Vermittlereinheiten B1, B2 untereinander ausgetauscht, wobei aus den von den Feldeinheiten FD1, FD2, FD3, FD4 gesammelten und bearbeiteten Daten DA z.B. Steuer- und/oder Regeldaten DA abgeleitet werden können, welche dann von den Feldeinheiten FD1, FD2, FD3, FD4 wie z.B. Steuereinheiten, Regeleinheiten, Aktoren, etc. dazu verwendet werden können, um das physische System PS zu beeinflussen. Auf den Feldeinheiten FD1, FD2, FD3, FD4 können dazu entsprechende Anwendungen bzw. Applikationen hinterlegt sein und ablaufen, durch welche beispielsweise eine oder mehrere Funktionalitäten (z.B. Sensor, Messeinheit, Datenverarbeitung, Steuerung, Regelung, etc.) der jeweiligen Feldeinheit FD1, FD2, FD3, FD4 festgelegt werden. Funktionsmodule können dabei z.B. als Software-Einheiten, als Software-/Hardware-Einheiten oder gegebenenfalls als Hardware-Einheiten ausgestaltet sein.

Im cyber-physischen System CPS weisen allerdings das physische System PS und das Kommunikationsnetz KN voneinander unabhängig Topologien auf. Die Topologie des physischen Systems PS ist z.B. durch physische Verbindungen zwischen den Komponenten des physischen Systems PS festgelegt, wobei das physische System PS eine sich dynamisch verändernde Topologie aufweisen kann (z.B. Änderung eines Versorgungsgebietes durch ein Umspannwerk in einem Energieversorgungsnetz, wodurch z.B. je nach Topologie unterschiedliche Ortsnetzstationen an das Umspannwerk angebunden sein können, Umkonfiguration einer Fertigungs-/Produktionsanlage, etc.). Die Topologie des Kommunikationsnetzes KN bzw. Kommunikationstopologie wird üblicherweise sowohl durch eine physische Vernetzung (z.B. kabelgebunden, drahtlos, optisch, etc.) als auch durch eine logisches Vernetzung (z.B. Routing in einem Ethernet basierten Netzwerk, etc.) für einen Datenaustausch zwischen den Komponenten des physischen Systems PS bzw. den zugehörigen Feldeinheiten FD1, FD2, FD3, FD4 vorgegeben, zwischen welchen für eine Überwachung, Steuerung und/oder Regelung Daten DA und Informationen KV ausgetauscht werden sollen. Dabei kann die logische Kommunikationstopologie des Kommunikationsnetzes KN beispielsweise mittels eines so genannten Software-Defined-Networks- bzw. SDN-Konzeptes festlegt werden. Weiterhin kann im Kommunikationsnetz KN für eine Datenvermittlung bzw. - übertragung ein so genannter Publish-Subscribe-Mechanismus eingesetzt werden, bei welchem Daten und/oder Nachrichten über eine Vermittlungseinheit B1, B2 bzw. einen Broker B1, B2 zwischen Daten/Nachrichten aussendenden und Daten/Nachrichten empfangenden Feldeinheiten ausgetauscht werden.

Zum Erkennen von Änderungen der Topologie des physischen Systems PS wird das physische System PS in einem Überwachungsschritt 1 laufend überwacht. Dazu kann eine zentrale Topologie-Detektionseinheit DSTD vorgesehen werden, von welcher Änderungen der Topologie im physischen System PS festgestellt werden können. Auf Basis der festgestellten, geänderten Topologie des physischen Systems PS können Komponenten des physischen Systems als benachbart - d.h. als miteinander verbunden und von physikalischen Größe (z.B. Strom, Wasserfluss, Produkteinheitenfluss, etc.) durchflossen - erkannt werden.

Eine Information über eine festgestellte Änderung der Topologie des physischen Systems PS bzw. über jeweils als benachbart erkannten Komponenten des physischen Systems PS kann dann von der zentralen Topologie-Detektionseinheit DSTD in zumindest zwei Weiterleitungsschritten 2, 3 beispielsweise an eine Managementeinheit BM und an eine zentrale Kontrolleinheit KE des Kommunikationsnetzes KN weitergeleitet werden. Dabei kann z.B. die Information über detektierte Struktur- bzw. Topologieänderung des physischen System PS in einem ersten Weiterleitungsschritt 2 an die Managementeinheit BM und in einem zweiten Weiterleitungsschritt 3 an die zentrale Kontrolleinheit KE des Kommunikationsnetzes KN übermittelt und gemeldet werden. Die Managementeinheit BM und die Kontrolleinheit KE können auch als integrierte Einheit realisiert werden.

Der zentralen Kontrolleinheit KE ist eine Topologie-Mapping-Einheit TM zugeordnet. Von der Topologie-Mapping-Einheit TM wird in einem Planungsschritt 4 auf Basis der festgestellten, geänderten Topologie des physischen System PS eine Kommunikationsnetztopologie für das Kommunikationsnetz KN geplant bzw. dynamisch abgeleitet. Im Planungsschritt 4 wird bei der Planung der logischen Kommunikationsnetztopologie für das Kommunikationsnetz KN auf Basis der Information über die geänderte Topologie des physischen Systems PS und den daraus als benachbart erkannten Komponenten des physischen Systems PS erkannt, welche Kommunikations-Subnetze zu bilden sind. Dabei werden die jeweils zu den als benachbart erkannten Komponenten zugehörigen Feldeinheiten FD1, FD2, FD3, FD4 zu Kommunikations-Subnetzen zusammengefasst. Bei der im Planungsschritt 4 erstellten, logischen Kommunikationsnetztopologie wird damit berücksichtigt, welche Feldeinheiten FD1, FD2, FD3, FD4 bzw. darauf ablaufende Anwendungen welchem Kommunikations-Subnetz zugeordnet sind und daher miteinander kommunizieren müssen.

Weitgehend parallel zum Planungsschritt 4 wird in einem Konfigurationsschritt 5 z.B. vom der Managementeinheit BM ebenfalls aus der Information über die geänderte Topologie des physischen Systems PS, welche im ersten Weiterleitungsschritt 2 an die Managementeinheit BM übertragen wurde, und auf Basis einer zentral abgelegten Konfiguration des cyber-physischen Systems CPS festgestellt, für welche Kommunikations-Subnetze jeweils eine Vermittlereinheit B1, B2 zur Verfügung gestellt werden muss. Die Vermittlereinheiten B1, B2 können dabei von der Managementeinheit BM konfiguriert, verteilt und gestartet bzw. aktiviert werden. Gegebenenfalls werden die Vermittlereinheiten B1, B2 von der Managementeinheit BM auch installiert. D.h. die Managementeinheit BM erkennt aufgrund von Informationen über die Topologie des physischen Systems PS und einer zentral abgelegten Konfiguration des cyber-physischen Systems CPS, welche Komponenten im physischen System PS benachbart sind bzw. von welchen zugehörigen Feldeinheiten FD1, FD2, FD3, FD4 Kommunikations-Subnetze gebildet werden. Pro Kommunikations-Subnetz wird dann von der Managementeinheit BM eine Vermittlereinheit B1, B2 bereitgestellt bzw. installiert und aktiviert bzw. gestartet.

Die Vermittlereinheit B1, B2 kann dabei auf einer vorgegebenen Feldeinheit FD1, FD4 im jeweiligen Kommunikations-Subnetz bereitgestellt und aktiviert werden. Alternativ oder zusätzlich können die Vermittlereinheiten B1, B2 für das jeweilige Kommunikations-Subnetz auf so genannten Edge-Computing-Feldeinheiten FD1, FD4 aktiviert werden, welche sich im selben Kommunikations-Subnetz befinden wie z.B. die Feldeinheiten FD1, FD4.

In einem Rekonfigurationsschritt 6 wird dann das Kommunikationsnetz KN bzw. seine Kommunikationstopologie auf Basis der detektierten Topologieänderung des physischen Systems bzw. der entsprechenden Information durch die zentrale Topologie-Detektionseinheit DSTD derart angepasst, dass von den Feldeinheiten FD1, FD2, FD3, FD4 des jeweiligen Kommunikations-Subnetzes über die im jeweiligen Kommunikations-Subnetz bereitgestellte und aktivierte Vermittlereinheit B1, B2 Daten und/oder Nachrichten ausgetauscht werden. Das bedeutet, dass im Rekonfigurationsschritt 6 auf Basis der im Planungsschritt 4 dynamisch aus der festgestellten Änderung der Topologie des physischen Systems PS abgeleiteten Kommunikationstopologie das Kommunikationsnetz KN entsprechend angepasst wird. Dabei werden z.B. mit Hilfe der zentralen Kontrolleinheit KE Routeneinstellungen, Routerkonfigurationen und/oder Datenwege im Kommunikationsnetz KN derart angepasst, dass alle einem Kommunikations-Subnetz zugeordneten Feldeinheiten FD1, FD2, FD3, FD4 bzw. zugehörigen Anwendungen mit der jeweiligen Vermittlereinheit B1, B2 des jeweiligen Kommunikations-Subnetzes kommunizieren können. Damit können als Datenquellen spezifizierte Feldeinheiten FD1, FD2, FD3, FD4 bzw. Anwendungen mit den ihnen aktuell logisch zugeordneten, als Datensenken spezifizierten Feldeinheiten FD1, FD2, FD3, FD4 bzw. Anwendungen innerhalb des jeweiligen Kommunikations-Subnetzes über die jeweilige Vermittlereinheit B1, B2 kommunizieren. Von den Feldeinheiten FD1, FD2, FD3, FD4 bzw. von den darauf ablaufenden Anwendungen wird dabei idealerweise kein Wissen über die jeweils aktuelle Topologie des physischen Systems PS benötigt.

Nach Anpassung der Kommunikationstopologie des Kommunikationsnetzes KN an die festgestellte, geänderte Topologie des physischen Systems PS können beispielsweise nicht mehr benötigte Vermittlereinheiten B1, B2 deaktiviert und/oder deinstalliert werden. Dies kann beispielsweise von der Managementeinheit BM durchgeführt werden.

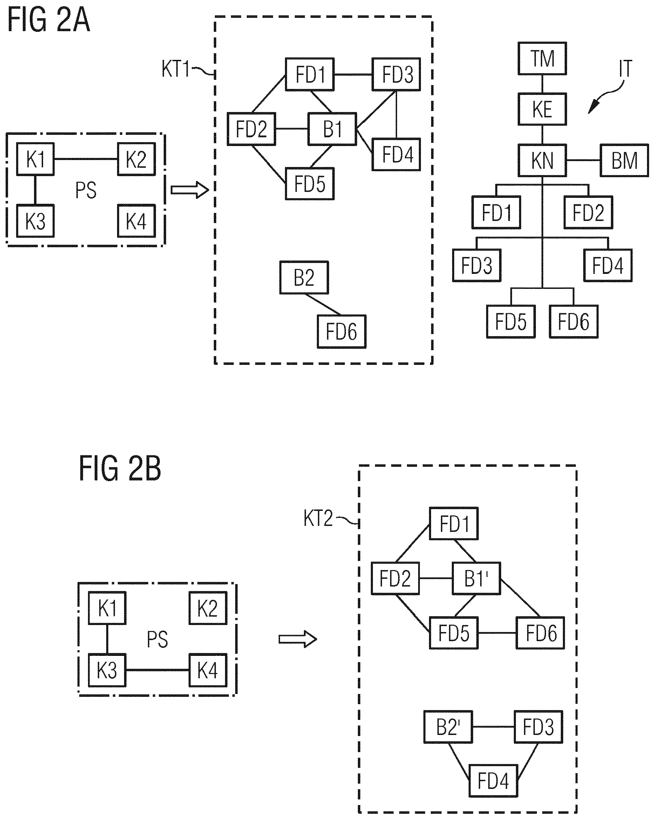

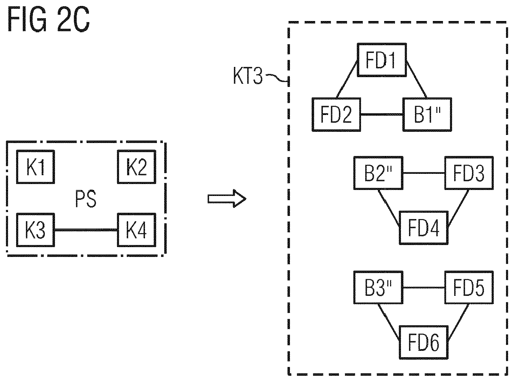

Figur 2a zeigt in einem linken Drittel ein beispielhaftes physisches System PS eines cyber-physischen Systems CPS wie z.B. ein Energieversorgungsnetz. Das physische System PS des cyber-physischen Systems CPS weist beispielhafte Komponenten K1 bis K4 auf (z.B. Erzeuger, Verbraucher, Wandler, Transformatoren, Schaltereinheiten, etc.), welche nach einer ersten Topologie miteinander verschaltet sind. In Figur 2a sind beispielsweise die ersten drei Komponenten K1 bis K3 miteinander verbunden, während ein vierte Komponenten K4 mit keiner der anderen drei Komponenten K1 bis K3 eine Verbindung aufweist. Weiterhin sind den Komponenten K1 bis K4 Feldeinheiten FD1 bis FD6 zugeordnet, auf welchen Anwendungen ablaufen und deren Funktionalität festlegen. Bei der beispielhafte Anwendung des erfindungsgemäßen Verfahrens, welche in der Figur 2a und den im Folgenden beschriebenen Figuren 2b und 2c beschrieben ist, sind beispielsweise einer ersten Komponente K1 eine erste und zweite Feldeinheit FD1, FD2, einer zweiten Komponente K2 eine dritte und vierte Feldeinheit FD3, FD4, einer dritten Komponente K3 eine fünfte Feldeinheit FD5 und einer vierten Komponente K4 eine sechste Feldeinheit FD6 zugeordnet.

In einem rechten Drittel der Figur 2a ist eine physikalische Konfiguration der Feldeinheiten FD1 bis FD6 im Kommunikationssystem IT des cyber-physischen Systems CPS beispielhaft dargestellt. Das Kommunikationssystem IT umfasst ein Kommunikationsnetz KN, welches beispielweise aus zumindest einer Routereinheit sowie Verbindungen zu den Feldeinheiten FD1 bis FD6 besteht und kann allerdings beliebig komplex - je nach Bedarf ausgestaltet sein. Die Feldeinheiten FD1 bis FD6 sind an das Kommunikationsnetz KN z.B. über die zumindest eine Routereinheit angebunden. Datenwege bzw. Routen im Kommunikationsnetz zwischen den Feldeinheiten FD1 bis FD6 (d.h. welche Feldeinheit FD1 bis FD6 mit welcher Feldeinheit FD1 bis FD6 Daten und/oder Nachrichten über eine Vermittlereinheit B1, B2 austauscht bzw. kommunizieren muss) werden von der zentralen Kontrolleinheit KE des Kommunikationssystems IT festgelegt. Die festzulegenden Datenwege im Kommunikationsnetz KN (d.h. eine Kommunikationstopologie des Kommunikationsnetzes KN) werden der zentralen Kontrolleinheit KE von der Topologie-Mapping-Einheit TM des Kommunikationssystems IT zur Verfügung gestellt. Von Topologie-Mapping-Einheit TM wird dazu eine Information über die Topologie des physischen Systems PS herangezogen, welche von der zentralen Topologie-Detektionseinheit DSTD übermittelt wurde, und darauf die jeweilige aktuelle Kommunikationstopologie für das Kommunikationsnetz KN abgeleitet. Weiterhin ist im Kommunikationssystem IT zentral die Managementeinheit BM vorgesehen, welche z.B. an das Kommunikationsnetz KN angebunden sein kann. Von der Managementeinheit BM können auf den Feldeinheiten FD1 bis FD6 beispielsweise Vermittlereinheiten B1, B2 gestartet bzw. installiert und/oder gestoppt bzw. deinstalliert werden. Die physikalische Konfiguration des Kommunikationssystems IT, welche beispielhaft der Einfachheit halber nur in der Figur 2a dargestellt ist, bleibt auch während der Anpassung der Kommunikationstopologie des Kommunikationsnetzes KN an die sich ändernde Topologie des physischen Systems PS des cyber-physischen Systems CPS unverändert. Die jeweils aktuelle Kommunikationstopologie des Kommunikationsnetzes KN kann beispielsweise mittels eines sogenannten Software-Defined-Networks oder SDN festgelegt werden.

In einem mittleren Teil der Figur 2a ist eine erste logische Kommunikationstopologie KT1 des Kommunikationsnetzes KN des cyber-physischen Systems CPS in beispielhafter und schematischer Weise dargestellt. Die erste logische Kommunikationstopologie KT1 wurde aus der ersten Topologie des physischen Systems PS - wie im rechten Teil der Figur 2a beispielhaft dargestellt - als Ausgangssituation für das erfindungsgemäße Verfahren abgeleitet. Die erste Topologie des physischen Systems PS, bei welcher die ersten drei Komponenten K1 bis K3 miteinander verbunden sind, während die vierte Komponente K4 kein Verbindung mit den anderen Komponenten K1 bis K3 aufweist, ist im Überwachungsschritt 1 von der Topologie-Detektionseinheit DSTD festgestellt worden. Im ersten und zweiten Weiterleitungsschritt 2, 3 wurde die Information über die erste Topologie des physischen Systems PS an die Managementeinheit BM sowie an die zentrale Kontrolleinheit KE weitergeleitet. Im Planungsschritt 4 wurde von der Topologie-Mapping-Einheit TM, welche der zentralen Kontrolleinheit KE zugeordnet ist, aus der erkannten, ersten Topologie des physischen Systems PS eine erste, logische Kommunikationstopologie KT1 dynamisch abgeleitet. Dabei wurden von der Topologie-Mapping-Einheit TM auf Basis der Information über die erste Topologie des physischen Systems PS zu bildende Kommunikations-Subnetze erkannt, in welchen zu den als benachbart erkannten Komponenten K1 bis K4 zugehörige Feldeinheiten FD1 bis FD6 zusammengefasst sind. Auf Basis der ersten Topologie des physischen Systems PS ergibt sich beispielsweise, dass das Kommunikationsnetz KN mittels erster logischer Kommunikationstopologie KT1 in zwei Kommunikations-Subnetze unterteilt werden muss. In einem ersten Kommunikations-Subnetz werden z.B. die Feldeinheiten FD1 bis FD5 zusammengefasst. Das zweite Kommunikation-Subnetz wird z.B. von der sechsten Feldeinheit FD6 gebildet.

Im Konfigurationsschritt 5 wurde von der Managementeinheit BM aus derselben Information über die erste Topologie des physischen Systems PS abgeleitet, dass auf einer der Feldeinheiten FD1 bis FD5 des ersten Kommunikations-Subnetzes und auf der Feldeinheit FD6 des zweiten Kommunikations-Subnetzes eine jeweilige Vermittlereinheit B1, B2 gestartet werden muss. Dabei wird z.B. dem ersten Kommunikations-Subnetz eine erste Vermittlereinheit B1 und dem zweiten Kommunikations-Subnetz eine zweite Vermittlereinheit B2 zur Verfügung gestellt.

Im Rekonfigurationsschritt 6 wurde dann von der zentralen Kontrolleinheit die erste, logische Kommunikationstopologie KT1 im Kommunikationsnetz KN umgesetzt - d.h. die Datenwege im Kommunikationsnetz KN derart aufgebaut, dass die Feldeinheiten FD1 bis FD5 bzw. die darauf ablaufenden Anwendungen über die erste Vermittlereinheit B1 im ersten Kommunikations-Subnetz und die sechste Feldeinheit FD6 bzw. deren Anwendungen im zweiten Kommunikations-Subnetz über die zweite Vermittlereinheit B2 kommunizieren können. Im ersten Kommunikations-Subnetz können beispielsweise die Feldeinheiten FD1 bis FD4 als Datenquellen Messwerte auf der ersten Vermittlereinheit B1 publizieren, welche dann z.B. von der fünften Feldeinheit als Datensenke bei der ersten Vermittlereinheit B1 abgefragt, verarbeitet und z.B. Nachrichten zum Steuern und/oder Regeln der zugeordneten dritten Komponente K3 verwendet werden. Die fünfte Feldeinheit FD5 kann als Datensenke allerdings keine Daten/Nachrichten von der sechsten Feldeinheit FD6 erhalten, da die zwei Kommunikations-Subnetz voneinander abgeschirmt sind.

In Figur 2b ist wieder das beispielhafte physische System PS des cyber-physischen Systems CPS - im linken Teil - dargestellt. Das physische System PS weist wieder vier beispielhafte Komponenten K1 bis K4 auf. Die Komponenten K1 bis K4 weisen nun allerdings eine veränderte, zweite Topologie auf, bei welcher die erste, die dritte und die vierte Komponente K1, K3, K4 miteinander verbunden sind und die zweite Komponente K2 keine Verbindung mit den anderen Komponenten K1, K3, K4 aufweist. Da sich die physikalische Konfiguration des Kommunikationssystems IT nicht verändert, ist dieses der Einfachheit halber in der Figur 2b nicht mehr dargestellt.

Die zweite Topologie des physischen Systems PS wird von der Topologie-Detektionseinheit DSTD im Überwachungsschritt 1 festgestellt. Im ersten und zweiten Weiterleitungsschritt 2, 3 wird die Information über die zweite Topologie des physischen Systems PS an die Managementeinheit BM sowie an die zentrale Kontrolleinheit KE weitergeleitet.

Im Planungsschritt 4 wird von der Topologie-Mapping-Einheit TM, welche der zentralen Kontrolleinheit KE zugeordnet ist, aus der erkannten, zweiten Topologie des physischen Systems PS eine zweite, logische Kommunikationstopologie KT2 dynamisch abgeleitet. Dabei werden von der Topologie-Mapping-Einheit TM auf Basis der Information über die zweite Topologie des physischen Systems PS zu bildende Kommunikations-Subnetze erkannt, in welchen jene Feldeinheiten FD1 bis FD6 zusammengefasst sind, welche zu den jeweils als benachbart erkannten Komponenten K1 bis K4 gehören. Auf Basis der zweiten Topologie des physischen Systems PS ergibt sich nun beispielsweise, dass das Kommunikationsnetz KN mittels der zweiten logischen Kommunikationstopologie KT2 wieder in zwei Kommunikations-Subnetze unterteilt werden muss. In einem neuen, ersten Kommunikations-Subnetz werden nun z.B. die Feldeinheiten FD1, FD2, FD5 und FD6 zusammengefasst, welche der ersten, der dritten und der vierten Komponente K1, K3 und K4 des physischen Systems zugeordnet sind. Ein neues, zweites Kommunikation-Subnetz wird nun z.B. von der dritten und vierten Feldeinheit FD3 und FD4 gebildet, welcher der zweiten Komponente K2 des physischen Systems zugeordnet sind.

Im Konfigurationsschritt 5 wird von der Managementeinheit BM aus derselben Information über die zweiten Topologie des physischen Systems PS abgeleitet, dass auf einer der Feldeinheiten FD1, FD2, FD5, FD6 des neuen, ersten Kommunikations-Subnetzes und auf einer der Feldeinheiten FD3, FD4 des neuen, zweiten Kommunikations-Subnetzes eine Vermittlereinheit B1', B2' aktiviert werden bzw. ablaufen muss. Dazu können beispielsweise die für die erste Kommunikationstopologie KT1 genutzten Vermittlereinheiten B1, B2 gestoppt und neue Vermittlereinheiten B1', B2' in den jeweiligen Kommunikations-Subnetzen gestartet werden. Alternativ kann aber auch z.B. die erste Vermittlereinheit B1 der ersten Kommunikationstopologie KT1 als neue, erste Vermittlereinheit B1' beibehalten werden. Die zweite Vermittlereinheit B2 des ersten Kommunikationstopologie, welche z.B. auf der sechsten Feldeinheit FD6 aufgelaufen ist, muss allerdings gestoppt und gegebenenfalls deinstalliert werden und eine neue, zweite Vermittlereinheit B2' im neuen, zweiten Kommunikations-Subnetz zur Verfügung gestellt werden.

Im Rekonfigurationsschritt 6 wird dann von der zentralen Kontrolleinheit die zweite, logische Kommunikationstopologie KT2 im Kommunikationsnetz KN umgesetzt - d.h. die Datenwege im Kommunikationsnetz KN derart aufgebaut, dass die Feldeinheiten FD1, FD3, FD5, FD6 bzw. die darauf ablaufenden Anwendungen über die neue, erste Vermittlereinheit B1' im neuen, ersten Kommunikations-Subnetz und die Feldeinheiten FD3, FD4 bzw. deren Anwendungen im neuen, zweiten Kommunikations-Subnetz über die neue, zweite Vermittlereinheit B2' kommunizieren können. Im neuen, ersten Kommunikations-Subnetz können nun z.B. die Feldeinheiten FD1, FD2, FD6 als Datenquellen Messwerte auf der neuen, ersten Vermittlereinheit B1' publizieren, welche dann z.B. von der fünften Feldeinheit FD5 als Datensenke bei der neuen, ersten Vermittlereinheit B1' abgefragt, verarbeitet und z.B. Nachrichten zum Steuern und/oder Regeln der zugeordneten dritte Komponente K3 verwendet werden. Die Anwendungen der dritten und vierten Feldeinheit FD3 und FD4 kommunizieren nun innerhalb des neuen, zweiten Kommunikations-Subnetzes über die neuen, zweiten Vermittlereinheit B2', wobei die fünfte Feldeinheit FD5 als Datensenke von diesen Feldeinheiten FD3, FD4 keine Daten/Nachrichten (z.B. Messdaten) mehr erhalten kann.

Auch in Figur 2c ist wieder das beispielhafte physische System PS des cyber-physischen Systems CPS - im linken Teil - dargestellt. Das physische System PS umfasst dabei wieder die vier beispielhaften Komponenten K1 bis K4 - allerdings mit einer gegenüber der in Figur 2a bzw. 2b dargestellten ersten bzw. zweiten Topologie neuen, veränderten dritten Topologie. Bei der dritten Topologie des physischen Systems PS sind nur die dritte und die vierte Komponente K3, K4 miteinander verschaltet. Die erste und die zweite Komponente K1, K2 weisen keine Verbindungen mit den jeweils anderen Komponenten K1 bis K4 auf. Da sich die physikalische Konfiguration des Kommunikationssystems IT wiederum nicht verändert, wurde dieses der Einfachheit halber auch in der Figur 2c nicht mehr dargestellt.

Die dritte Topologie des physischen Systems PS wird von der Topologie-Detektionseinheit DSTD im Überwachungsschritt 1 festgestellt. Im ersten und zweiten Weiterleitungsschritt 2, 3 wird die Information über die neulich veränderte bzw. dritte Topologie des physischen Systems PS an die Managementeinheit BM sowie an die zentrale Kontrolleinheit KE weitergeleitet.

Im Planungsschritt 4 wird von der Topologie-Mapping-Einheit TM, welche der zentralen Kontrolleinheit KE zugeordnet ist, aus der erkannten, dritten Topologie des physischen Systems PS eine dritte, logische Kommunikationstopologie KT3 dynamisch abgeleitet. Dabei werden von der Topologie-Mapping-Einheit TM auf Basis der Information über die neuerlich veränderte bzw. dritte Topologie des physischen Systems PS die neu zu bildenden Kommunikations-Subnetze erkannt, durch welche die jeweiligen Feldeinheiten FD1 bis FD6 für eine Kommunikation aufgrund der jeweils benachbart erkannten Komponenten K1 bis K4 zusammengefasst werden. Auf Basis der neulich veränderten, dritten Topologie des physischen Systems PS ergeben sich nun beispielsweise drei neu zu bildende Kommunikations-Subnetze, welche die neue, dritte Kommunikationstopologie KT3 für das Kommunikationsnetz KN darstellen. Dabei werden z.B. im neu zu bildenden ersten Kommunikations-Subnetz die erste und die zweite Feldeinheit FD1, FD2, welche der ersten Komponenten K1 zugeordnet sind, zusammengefasst. Das neu zu bildende zweite Kommunikationsnetz wird beispielsweise von der dritten und vierten Feldeinheit FD3 und FD4 gebildet, welcher der zweiten Komponente K2 des physischen Systems zugeordnet sind, und ein neu zu bildendes drittes Kommunikations-Subnetz wird von der fünften und sechsten Feldeinheit FD5, FD6 gebildet, welche zur dritten und vierten Komponente K3, K4 des physischen Systems PS gehören.

Im Konfigurationsschritt 5 wird von der Managementeinheit BM aus derselben Information über die dritte Topologie des physischen Systems PS abgeleitet, dass auf einer der Feldeinheiten FD1, FD2 des neu gebildeten, ersten Kommunikations-Subnetzes, auf einer der Feldeinheiten FD3, FD4 des zweiten Kommunikations-Subnetzes und auf einer der Feldeinheiten FD5, FD6 des neuen, dritten Kommunikations-Subnetzes eine Vermittlereinheit B1", B2", B3" aktiviert werden bzw. ablaufen muss. Dazu können beispielsweise die bereits, genutzten Vermittlereinheiten B1, B2' gestoppt und neue Vermittlereinheiten B1", B2" in den jeweiligen Kommunikations-Subnetzen gestartet werden. Alternativ kann aber auch z.B. die erste Vermittlereinheit B1 der ersten bzw. zweiten Kommunikationstopologie KT1, KT2 als neue, erste Vermittlereinheit B1" bzw. die zweite Vermittlereinheit B2' als neue, zweite Vermittlereinheit B2" beibehalten werden. Die dritte Vermittlereinheit B3", welche z.B. für die neue, dritte Kommunikationstopologie auf der sechsten Feldeinheit FD6 zur Verfügung gestellt wird, muss allerdings neu gestartet bzw. gegebenenfalls installiert werden.

Im Rekonfigurationsschritt 6 wird dann wieder von der zentralen Kontrolleinheit KE die neue dritte, logische Kommunikationstopologie KT3 im Kommunikationsnetz KN umgesetzt - d.h. die Datenwege im Kommunikationsnetz KN derart aufgebaut, dass die Feldeinheiten FD1, FD2 bzw. die darauf ablaufenden Anwendungen über die neue, erste Vermittlereinheit B1" im neuen, ersten Kommunikations-Subnetz, die Feldeinheiten FD3, FD4 bzw. deren Anwendungen im neuen, zweiten Kommunikations-Subnetz über die neue, zweite Vermittlereinheit B2" und die Feldeinheiten FD5, FD5 bzw. deren Anwendungen über die neue, dritte Vermittlungseinheit B3" im dritten Kommunikations-Subnetz kommunizieren können. Im neuen, dritten Kommunikations-Subnetz kann nun z.B. die sechste Feldeinheit FD6 als Datenquellen Messwerte auf der neuen, dritten Vermittlereinheit B3" publizieren, welche dann z.B. von der fünften Feldeinheit FD5 als Datensenke bei der neuen, dritten Vermittlereinheit B3" abgefragt, verarbeitet und z.B. Nachrichten zum Steuern und/oder Regeln der zugeordneten dritte Komponente K3 verwendet werden können. Die Anwendungen der ersten und zweiten Feldeinheit FD1, FD2 bzw. der dritten und vierten Feldeinheit FD3 und FD4 kommunizieren nun innerhalb des neuen, ersten bzw. zweiten Kommunikations-Subnetzes über jeweiligen neuen, entsprechenden Vermittlereinheiten B1", B2", wobei die fünfte Feldeinheit FD5 als Datensenke von diesen Feldeinheiten FD1, FD2, FD3, FD4 keine Daten/Nachrichten (z.B. Messdaten) mehr erhalten kann.

## Patentansprüche

1. Verfahren zur Anpassung einer Kommunikationstopologie in einem so genannten cyber-physischen System (CPS), welches zumindest ein physisches System (PS) und ein Kommunikationsnetz (KN) umfasst, wobei die Kommunikationstopologie des Kommunikationsnetzes (KN) von einer Topologie des physischen Systems (PS) zumeist unabhängig ist, wobei den Komponenten des physischen Systems (PS) Feldeinheiten (FD1, FD2, FD3, FD4) zugeordnet sind, auf welchen entsprechend der jeweiligen Funktionalität einer jeweiligen Feldeinheit (FD1, FD2, FD3, FD4) Anwendungen ablaufen, und von welchen entsprechend einer jeweiligen Funktionalität die Kommunikationstopologie des Kommunikationsnetzes (KN) für einen Datenaustausch unter Verwendung von Vermittlereinheiten (B1, B2) genutzt wird, ***dadurch gekennzeichnet, dass*** während einer laufenden Überwachung des physischen Systems (PS) eine Änderung der Topologie des physischen Systems festgestellt wird (1), dass auf Basis der festgestellten, geänderten Topologie des physischen Systems (PS) Komponenten im physischen System (PS) als benachbart erkannt werden (1), dass die zu den als benachbart erkannten Komponenten zugehörigen Feldeinheiten (FD1, FD2, FD3, FD4) zu Kommunikations-Subnetzen zusammengefasst werden (3, 4), dass je Kommunikations-Subnetz eine Vermittlereinheit (B1, B2) zur Verfügung gestellt und aktiviert wird (2, 5), und dass auf Basis der festgestellten, geänderten Topologie des physischen Systems (PS) die Kommunikationstopologie des Kommunikationsnetzes (KN) derart rekonfiguriert wird (6), dass von den jeweiligen Feldeinheiten (FD1, FD2, FD3, FD4) des jeweiligen Kommunikations-Subnetzes über die im jeweiligen Kommunikations-Subnetz zur Verfügung gestellte Vermittlereinheit (B1, B2) Daten ausgetauscht werden.

2. Verfahren nach Anspruch 1, ***dadurch gekennzeichnet, dass*** eine zentrale Topologie-Detektionseinheit (DSTD) vorgesehen wird, von welcher das physische System (PS) laufend auf Änderungen der Topologie überwacht wird (1) und von welcher Änderungen der Topologie des physischen Systems (PS) festgestellt und weitergeleitet werden (2, 3).

3. Verfahren nach einem der Ansprüche 1 bis 2, ***dadurch gekennzeichnet, dass*** die festgestellte Änderung der Topologie des physischen Systems (PS) an eine Managementeinheit (BM) und an eine zentrale Kontrolleinheit (KE) des Kommunikationsnetzes weitergeleitet wird (2, 3).

4. Verfahren nach Anspruch 3, ***dadurch gekennzeichnet, dass*** die Vermittlereinheiten (B1, B2) für die jeweiligen Kommunikations-Subnetze von der Managementeinheit (BM) konfiguriert, verteilt und gestartet werden (5).

5. Verfahren nach Anspruch 3 oder 4, ***dadurch gekennzeichnet, dass*** von einer der zentralen Kontrolleinheit (KE) zugeordneten Topologie-Mapping-Einheit (TM) die Kommunikationstopologie auf Basis der geänderten Topologie des physischen Systems (PS) derart dynamisch abgeleitet wird (4), dass die zu den als benachbart erkannten Komponenten zugehörigen Feldeinheiten (FD1, FD2, FD3, FD4) zu Kommunikations-Subnetzen zusammengefasst werden.

6. Verfahren nach Anspruch 3 bis 5, ***dadurch gekennzeichnet, dass*** eine Rekonfiguration der Kommunikationstopologie des Kommunikationsnetzes (KN) durch die zentralen Kontrolleinheit (KE) des Kommunikationsnetzes (KN) durchgeführt wird (6).

7. Verfahren nach einem der Ansprüche 1 bis 6, ***dadurch gekennzeichnet, dass*** die für das jeweilige Kommunikations-Subnetz zur Verfügung gestellte Vermittlereinheit (B1, B2) auf einer vorgegebenen Feldeinheit (FD1, FD4) im jeweiligen Kommunikations-Subnetz bereitgestellt und aktiviert wird (5).

8. Verfahren nach Verfahren nach einem der Ansprüche 1 bis 6, ***dadurch gekennzeichnet, dass*** die für das jeweilige Kommunikations-Subnetz zur Verfügung gestellte Vermittlereinheit (B1, B2) auf einer so genannten Edge-Computing-Feldeinheit (FD1, FD4) aktiviert wird (5).

9. Verfahren nach einem der vorangegangenen Ansprüche, ***dadurch gekennzeichnet, dass*** nach der Anpassung der Kommunikationstopologie an die festgestellte, geänderte Topologie des physischen Systems (PS) nicht mehr benötigte Vermittlereinheiten (B1, B2) deaktiviert und/oder deinstalliert werden (6).

10. Verfahren nach einem der vorangegangenen Ansprüche, ***dadurch gekennzeichnet, dass*** im Kommunikationsnetz (KN) des cyber-physischen Systems (CPS) ein so genannter Publish-Subscribe-Mechanismus eingesetzt wird.

11. Verfahren nach einem der vorangegangenen Ansprüche, ***dadurch gekennzeichnet, dass*** eine Kommunikationsnetztopologie des Kommunikationsnetzes (KN), welche eine Basis für die Kommunikationstopologie des Kommunikationsnetzes (KN) bildet, mittels eines so genannten Software-Defined-Networks oder SDN festgelegt wird.
